Europäisches Patentamt

(19) European Patent Office

Office européen des brevets

(11) Veröffentlichungsnummer: **0 334 059 B1**

(12) **EUROPÄISCHE PATENTSCHRIFT**

(45) Veröffentlichungstag der Patentschrift:
06.11.91 Patentblatt 91/45

(51) Int. Cl.⁵: **C08J 9/12**

(21) Anmeldenummer: **89103543.8**

(22) Anmeldetag: **01.03.89**

---

(54) Verfahren zur Herstellung von Polyurethanschaumstoffen.

(30) Priorität: **11.03.88 DE 3808081**

(43) Veröffentlichungstag der Anmeldung:
**27.09.89 Patentblatt 89/39**

(45) Bekanntmachung des Hinweises auf die
Patenterteilung:
**06.11.91 Patentblatt 91/45**

(84) Benannte Vertragsstaaten:
**AT BE CH DE ES FR GB IT LI NL**

(56) Entgegenhaltungen:
**DE-A- 2 917 495**
**GB-A- 2 053 943**
**US-A- 4 337 318**

(73) Patentinhaber: **BAYER AG**
**W-5090 Leverkusen 1 Bayerwerk (DE)**

(72) Erfinder: **Krippl, Kurt**
**Niederstrasse 104**
**W-4019 Monheim (DE)**
Erfinder: **Schulte, Klaus, Dipl.-Ing.**
**Kurt-Schumacher-Ring 91b**
**W-5090 Leverkusen (DE)**
Erfinder: **Hoffmann, Erwin**
**Martin-Buber-Strasse 47**
**W-5090 Leverkusen 3 (DE)**
Erfinder: **Wiedermann, Rolf, Dr.**
**Wiesenstrasse 18**
**W-5068 Odenthal (DE)**

## Beschreibung

Die Erfindung betrifft ein Verfahren zur Herstellung von Polyurethanschaumstoffen durch Umsetzung eines schäumfähigen Reaktionsgemisches aus

a) Polyisocyanaten,

b) Polyolen vom Molekulargewicht 350 bis 10.000,

c) flüssigen Treibmitteln und gegebenenfalls

d) weiteren Zusatzmitteln, indem man zunächst die Komponente a) und/oder b) mit dem flüssigen Treibmittel versetzt und zusätzlich ein inertes Gas eindispergiert, diese Komponente sofort und kontinuierlich der Vermischung mit der anderen Komponente zuführt und dabei bis zur Vermischung unter mindestens dem Druck hält, unter welchem die Gasbeladung stattfand, und das erzeugte Reaktionsgemisch aufschäumen läßt.

Treibmittel dienen bei der Schaumstoffherstellung zum Erzielen der gewünschten Rohdichte. Darüber hinaus sind mit Chlorfluoralkanen als Treibmittel bessere Wärmedämmeigenschaften bei der Herstellung von Isolierschaumstoffen zu erzielen.

Die Beladung mindestens einer der Reaktionskomponenten mit Gas dient dabei der Bildung von Nukleationskeimen für den Start der Schäumreaktion.

Es hat sich als schwierig erwiesen, die leicht flüchtigen, flüssigen Treibmittel in der damit versetzten Komponente bzw. im Reaktionsgemisch zu halten. Erhebliche Mengen an Treibmittel gehen bei der weitgehend gebräuchlichen Injektionsvermischung aufgrund des Drucksprunges vom Injektionsdruck auf Mischkammerdruck sowie beim Austritt des Reaktionsgemisches aus der Mischkammer durch die Entspannung auf Atmosphärendruck verloren und stehen für die Schaumstoffbildung nicht mehr zur Verfügung.

Es besteht die Aufgabe, ein Verfahren anzubieten, welches bei guten physikalischen Eigenschaften des hergestellten Schaumstoffes eine Treibmittelreduzierung dadurch gestattet, daß das zugegebene Treibmittel möglichst vollständig seiner Bestimmung, nämlich Erzielung der gewünschten Rohdichte sowie gegebenenfalls besserer Wärmedämmeigenschaften, zugeführt wird.

Diese Aufgabe wird dadurch gelöst, daß man — bezogen auf 22°C und Normaldurck (= 1,013 bar) — die Treibmittel enthaltende Komponente a) und/oder b) bei einem Druck von 2 bis 8 bar mit 2 bis 10 Vol.-% Gas belädt, wobei man das Gas so fein eindispergiert, daß man eine mittlere Größe der Gasblasen von maximal 1,5 mm, vorzugsweise von maximal 1,0 mm, erhält.

In der Praxis wird man aber nicht bei Normaldruck begasen. Üblicherweise bevorzugt man einen Druck von etwa 2 bis 8 bar, vorzugsweise um 4 bar. Soweit nicht in klimatisierten Räumen gearbeitet wird, deren Temperatur erfahrungsgemäß meist um 22°C gehalten wird, können sich auch jahreszeitlich bedingte, größere Temperaturschwankungen ergeben, welche von Einfluß sind. Weichen die tatsächlichen Temperaturen der begasten Komponente, insbesondere des Gases, sowie der Begasungsdruck von den genannten Bezugswerten in nicht vernachlässigbarer Weise ab, so läßt sich die tatsächliche, maximal zulässige Gasbeladung im Sinne der Erfindung mittels der Gasgleichung $p \times V = RT$ ermitteln. Die tatsächliche, maximal zulässige Blasengröße läßt sich ebenfalls aus der Gasgleichung und der Volumenformel (Kugelvolumen) errechnen. Temperaturen über 22°C vergrößern gegenüber der genannten Bezugstemperatur das Gasvolumen, höhere Drücke als Normaldruck verringern es. Dabei sind die flüssigen Komponenten als inkompressibel zu betrachten. Der effektive Gasgehalt läßt sich beispielsweise über die Dichte der gasbeladenen Komponente ermitteln, wobei Temperatur und Druck ebenfalls zu berücksichtigen sind. Zur Ermittlung der mittleren Blasengröße unter Berücksichtigung von tatsächlichem Druck und Temperatur führt man den mit Gas beladenen Komponentenstrom beispielsweise durch ein transparentes, vorzugsweise rechteckiges Rohr und photographiert ihn. Erforderlichenfalls vergrößert man das Photo und stellt die Anzahl der Blasen pro Flächeneinheit fest sowie — unter Berücksichtigung des Vergrößerungsmaßstabes des Photos — die Anzahl von Blasen jeweils gleichen Durchmessers bzw. näherungsweise gleichen Durchmesserbereiches und ermittelt daraus die mittlere Blasengröße. Für die betriebliche Praxis bedeutet dies nur anfänglichen Aufwand, weil in der Regel nur wenige chemische Systeme verarbeitet werden, und zwar jeweils meist unter wiederkehrenden Bedingungen. Die tatsächliche, maximal zulässige Gasbeladung und Blasengröße im Sinne der Erfindung lassen sich dann für die verschiedenen Temperaturen und Drücke in Diagrammen oder Tabellen für den wiederholten Gebrauch festhalten, so daß es keiner fortwährenden Berechnungen und Ermittlungen bedarf. Besitzt man eine einwandfrei arbeitende Gasbeladungseinrichtung, wie sie beispielsweise Gegenstand der parallelen europäischen Patentanmeldung EP-A-332032 ist, so bedarf es später auch nicht mehr der wiederkehrenden Bestimmung der Blasengröße, wenn man eine entsprechende Eichkurve für den Betrieb der Gasbeladungseinrichtung gefahren hat.

Bisher hat man bei der RIM-Technik (Reaktion-Injection-Moulding) möglichst hohe Gasbeladungen praktiziert, und zwar etwa zwischen 20 und 70 Vol.-%, bezogen auf das Gesamtvolumen der begasten Komponenten. D.h., beim Herstellen von Schaumstoffen höherer Rohdichte dient die Gasbeladung um besseren

2

Auftreiben des Reaktionsgemisches mit dem Vorteil der Erzeugung eines inneren Nachdruckes im Formwerkzeug zum Erzielen einer besseren Oberflächenbeschaffenheit. Bei der Herstellung von Schaumstoffen niedrigerer Rohdichte, etwa unter 100 kg/m³, war bisher ein höherer Einsatz von flüssigem Treibmittel erforderlich, um die gewünschte Rohdichte zu erhalten. Eine gezielte Zugabe eines gasförmigen Stoffes in eine der Reaktionskomponenten war bei diesen Systemen nicht üblich.

Es war völlig überraschend, daß kleinste Gasmengen in feinstdispergierter Form eine Einsparung an flüssigem Treibmittel bis etwa 20% bewirken. Dieses Phänomen läßt sich nachträglich so erklären, daß bei der Einbringung größerer Treibmittelmengen zwangsläufig auch Blasen größeren mittleren Durchmessers entstehen, welche sich mit Treibmittel anreichern, bei der Verarbeitung dann zerplatzen, zur Lunkerbildung führen, wobei Treibmittel ins Freie gelangt. Dispergiert man geringe Gasmengen in der vorgeschlagenen Weise in feinster Form ein, so besteht diese Gefahr nicht. Das Treibmittel lagert sich an die Gasanteile an, wird dadurch optimal gehalten und verteilt. Vorteilhafte weitere Effekte sind in der erzielten feinen Zellstruktur zu finden, wodurch das Schrumpfverhalten, die Konturstabilität der Zellen sowie andere physikalische Werte, wie z.B. die Druckfestigkeit, erheblich verbessert werden. Durch die geringe Gasbeladung wird das chemische System überraschenderweise aktiver, so daß auch Aktivator eingespart wird. Wichtig ist allerdings, daß die mit Gas beladenen Komponenten möglichst auf kürzestem Wege und ohne große Zeitverzögerung der Reaktionsvermischung zugeführt werden. Eine Zwischenlagerung sollte nicht stattfinden, damit sich nicht kleinere Blasen zu größeren vereinigen können. Weiterhin ist darauf zu achten, daß von der Begasung bis zum Moment der Reaktionsvermischung keine zwischenzeitliche Druckentspannung stattfindet, weil dies eine Blasenvergrößerung und — vereinigung verursachen würde.

Die Herstellung von Urethangruppen aufweisenden Schaumstoffen ist an sich bekannt.

Zur Herstellung der Polyurethanschaumstoffe werden eingesetzt :

1. Als Ausgangskomponenten aliphatische, cycloaliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

$$Q(NCO)_n$$

in der

n = 2-4, vorzugsweise 2-3, und

Q = einen aliphatischen Kohlenwasserstoffrest mit 2-18, vorzugsweise 6-10, C-Atomen, einen cycloaliphatischen Kohlenwasserstoffrest mit 4-15, vorzugsweise 5-10, C-Atomen, einen aromatischen Kohlenwasserstoffrest mit 6-15, vorzugsweise 6-13, C-Atomen oder einen araliphatischen Kohlenwasserstoffrest mit 8-15, vorzugsweise 8-13, C-Atomen bedeuten,

z.B. solche Polyisocyanate, wie sie in der DE-A-2832253, Seiten 10-11, beschrieben werden. Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI") ; Polphenylpolymethylenpolyisocyanate, wie sie durch Anilin-Formaldehyd-Kondensation oder anschließende Phosgenierung hergestellt werden ("rohes MDI"), und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

2. Ausgangskomponenten sind ferner Polyole vom Molekulargewicht 350 bis 10.000, vorzugsweise mindestens zwei Hydroxylgruppen aufweisende Polyether oder Polyester. Derartige Polyether und Polyester sind für die Herstellung von zellförmigen Polyurethanen an sich bekannt und z.B. in der DE-A-2832253, Seiten 11-18, beschrieben.

3. Als flüssige Treibmittel werden Chlorfluoralkane, insbesondere Monofluor, Trichlormethan, Difluordichlormethan oder 1,2-Difluor-1,1,2,2-tetrachlorethan sowie Methylenchlorid verwendet. Weitere unkonventionelle Treibmittel sind Nitroalkane, Nitroharnstoff, Aldoxime, Amide, aktive $CH_2$-Verbindungen und Borsäure, soweit sie in flüssiger Form vorliegen bzw. eingebracht werden können (siehe Kunststoff-Handbuch Polyurethane, Band VII, 2. Auflage, 1983, Carl-Hanser-Verlag, München/Wien, insbesondere Seiten 103, 104).

4. Gegebenenfalls werden Zusatzmittel mitverwendet wie

a) Verbindungen mit mindestens zwei gegenüber Isocyanaten reaktionsfähigen Wasserstoffatomen und einem Molekulargewicht von 32 bis 349. Man versteht hierunter Hydroxylgruppen und/oder Ami-

3

nogruppen und/oder Thiolgruppen und/oder Carboxylgruppen aufweisende Verbindungen, vorzugsweise Hydroxylgruppen und/oder Aminogruppen aufweisende Verbindungen, die als Ketten verlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-A-2832253, Seiten 19-20, beschrieben ;

b) Katalysatoren der an sich bekannten Art in Mengen bis zu 10 Gew.-%, bezogen auf die Mengen an Polyolen (Komponente 2) ;

c) oberflächenaktive Zusatzstoffe, wie Emulgatoren und Schaumstabilisatoren ;

d) Reaktionsverzögerer, z.B. sauer reagierende Stoffe, wie Salzsäure oder organische Säurehalogenide, ferner Zellregler der an sich bekannten Art, wie Paraffine oder Fettalkohole oder Dimethylpolysiloxane, sowie ferner Pigmente oder Farbstoffe und Flammschutzmittel der an sich bekannten Art, z.B. Tris-chlorethylphosphat, Trikresylphosphat, ferner Stabilisatoren gegen Alterungs- und Witterungseinflüsse, Weichmacher und fungistatisch und bakteriostatisch wirkende Substanzen sowie Füllstoffe, wie Bariumsulfat, Kieselgur, Ruß- oder Schlämmkreide.

Diese gegebenenfalls mitzuverwendenden Hilfs- und Zusatzstoffe werden beispielsweise in der DE-A-2732292, Seiten 21-24, beschrieben.

Weitere Beispiele von gegebenenfalls mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103-113, beschrieben.

Die erfindungsgemäß einzusetzenden Schaumstoffe werden z.B. wie folgt hergestellt :

Die Reaktionskomponenten werden nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-A-2764565 beschrieben werden. Einzelheiten über Verarbeitungseinrichtungen, die auch erfindungsgemäß in Frage kommen, werden ferner im Kunststoff-Handbuch, Band VII, herausgegeben von Vieweg und Höchtlen, Carl-Hanser-Verlag, München 1966, z.B. auf den Seiten 121 bis 205, beschrieben.

Gemäß einer weiteren neuen Durchführungsform des Verfahrens belädt man maximal mit 5 Vol.-% Gas.

Es hat sich gezeigt, daß bereits mit Gasbeladungen unter 5 Vol.-%, und besonders um 2 bis 3 Vol.-%, optimale Resultate zu erzielen sind.

Vorzugsweise verwendet man als inerte Gase Gase Luft, Kohlendioxid, Stickstoff, Edelgase, insbesondere Argon.

Die Verwendung dieser Gase ist an sich nichts Neues ; sie wurden bisher aber in weit größeren Mengen — wie eingangs beschrieben —, nämlich zwischen 20 bis 70 Vol.-%, beigegeben.

Beispiele

Die Herstellung der Schaumstoffe in Form von Hartschaumstoffplatten erfolgte auf einer Doppeltransportbandanlage mit Hilfe einer Hochdruckverschäumungsmaschine.

Die Plattenstärke betrug 40 mm.

Die verwendete Polyolmischung hatte folgende Zusammensetzung :

| 30 Gew.-Teile | eines Tolylendiaminopolyethers mit Ethylenoxid und Propylenoxid (Verhältnis 1 : 1) und einer Hydroxylzahl 470 |
|---|---|
| 15 Gew.-Teile | eines Ethylendiamin-Propylenoxidpolyethers mit Hydroxylzahl 630 |
| 35 Gew.-Teile | eines Zucker-Propylenoxidpolyethers mit einer Hydroxylzahl 420 |
| 7 Gew.-Teile | Glycerin |
| 14 Gew.-Teile | Trichlorethylphosphat |

Die Hydroxylzahl der Mischung betrug 510.

Die folgende Tabelle gibt die Verschäumungsbedingungen und die Ergebnisse wieder.

Dabei entsprechen die Beispiele 2, 4, 5 und 6 dem neuen Verfahren ; die Beispiele 1 und 3 sind Vergleichsbeispiele.

EP 0 334 059 B1

| | B e i s p i e l e | | | | | |
|---|---|---|---|---|---|---|
| | 1 | 2 | 3 | 4 | 5 | 6 |
| Polyolmischung (Gew.-Tle) | 100 | 100 | 100 | 100 | 100 | 100 |
| Wasser        (Gew.-Tle) | 0,6 | 0,6 | 0,6 | 0,6 | 0,6 | 0,6 |
| Siliconstabilisator B 8404 der Fa. Goldschmidt,Essen, BRD                  (Gew.-Tle) | 1,5 | 1,5 | 1,5 | 1,5 | 1,5 | 1,5 |
| polymeres Diphenylmethan-diiso-cyanat mit einem Gehalt von 50 % 2,4'- bzw. 4,4'-Diphenyl-methan-diisocyanat    (Gew.-Tle) | 150 | 150 | 150 | 150 | 150 | 150 |
| Kennzahl | 105 | 105 | 105 | 105 | 105 | 105 |
| Plattendicke (mm) | 40 | 40 | 40 | 40 | 40 | 40 |
| Aktivator: Dimethylcyclohexylamin                 (Gew.-Tle) | 1,5 | 1,5 | 1,5 | 1,5 | 1,5 | 1,0 |
| Flüssiges Treibmittel: Trichlor-fluormethan          (Gew.-Tle) | 40 | 35 | 35 | 35 | 32 | 32 |
| Begasungsbedingungen: Temperatur ($^{\circ}$C) Druck (bar) | 20 4 | 20 4 | 20 4 | 20 4 | 20 4 | 20 4 |
| Luft: Errechneter Wert in Vol.-% bei 22$^{\circ}$C und Normaldruck | – | 6 | 20 | – | – | – |

Fortsetzung

| | Beispiele | | | | | |
|---|---|---|---|---|---|---|
| | 1 | 2 | 3 | 4 | 5 | 6 |
| Mittlerer Blasendurchmesser (mm) bei 22°C und Normaldruck | - | 0,8 | 2,5 | - | - | - |
| $CO_2$: Errechneter Wert in Vol.-% bei 22°C und Normaldruck | - | - | - | - | 3 | 3 |
| Mittlerer Blasendurchmesser (mm) bei 22°C und Normaldruck | - | - | - | - | 0,8 | 0,8 |
| Argon: Mittlerer Wert in Vol.-% bei 22°C und Normaldruck | - | - | - | 4 | - | - |
| Mittlerer Blasendurchmesser (mm) bei 22°C und Normaldruck | - | - | - | 0,6 | - | - |
| Rohdichte ($kg/m^3$) | 32,5 | 33,0 | 36,0 | 32,5 | 32,9 | 33,5 |
| Abbindezeit (Sekunden) | 30 | 23 | 23 | 21 | 22 | 30 |
| Zellstruktur Mittlerer Zelldurchmesser (mm) | 2,5 | 0,7 | 1,8 | 0,5 | 0,9 | 0,9 |
| Wärmeleitfähigkeit Watt/m.k | 0,0175 | 0,0175 | 0,0180 | 0,0175 | 0,0185 | 0,0185 |
| Druckfestigkeit $N/mm^2$ | 0,17 | 0,18 | 0,19 | 0,19 | 0,18 | 0,19 |
| Konturstabilität 5 stunden bei +80°C (% Länge, Breite, Höhe) | 0,6 | 0,6 | 0,6 | 0,6 | 0,6 | 0,6 |

EP 0 334 059 B1

EP 0 334 059 B1

## Patentansprüche

1. Verfahren zur Herstellung von Polyurethanschaumstoffen durch Umsetzung eines schäumfähigen Reaktionsgemisches aus

a) Polyisocyanaten,

b) Polyolen vom Molekulargewicht 350 bis 10.000,

c) flüssigen Treibmitteln und gegebenenfalls

d) weiteren Zusatzmitteln,

indem man zunächst die Komponente a) und/oder b) mit dem flüssigen Treibmittel versetzt und zusätzlich ein inertes Gas eindispergiert, diese Komponente sofort und kontinuierlich der Vermischung mit der anderen Komponente zuführt und dabei bis zur Vermischung unter mindestens dem Druck hält, unter welchem die Gasbeladung stattfand, und das erzeugte Reaktionsgemisch aufschäumen läßt, dadurch gekennzeichnet, daß man — bezogen auf 22°C und Normaldruck (= 1,013 bar) — die Treibmittel enthaltende Komponente a) und/oder b) bei enem Druck von 2 bis 8 bar mit 2 bis 10 Vol.-% Gas belädt, wobei man das Gas so fein eindispergiert, daß man eine mittlere Blasengröße der Gasblasen von maximal 1,5 mm erhält.

2. Verfahren nach Anspruch 1, dadurch gekennzeichnet, daß man mit maximal 5 Vol.-% Gas belädt.

3. Verfahren nach Anspruch 1 oder 2, dadurch gekennzeichnet, daß eine mittlere Blasengröße von maximal 1 mm eingestellt wird.

4. Verfahren nach einem der Ansprüche 1, 2 oder 3, dadurch gekennzeichnet, daß man als inerte Gase Luft, Kohlendioxid, Stickstoff oder Edelgase verwendet.

## Claims

1. A process for the production of polyurethane foams by reaction of a foamable reaction mixture of

a) polyisocyanates,

b) polyols having a molecular weight of 350 to 10,000,

c) liquid blowing agents and optionally

d) other additives

by initially adding the liquid blowing agent to component a) and/or b) and additionally incorporating an inert gas by dispersion, subjecting this component to immediate and continuous mixing with the other component and maintaining at least that pressure under which the charging with gas takes place up to mixing and allowing the reaction mixture produced to foam, characterized in that, based on 22°C and normal pressure (= 1.013 bar), component a) and/or b) containing the blowing agent is charged with 2 to 10% by volume gas under a pressure of 2 to 8 bar, the gas being so finely dispersed that an average size of the gas bubbles of at most 1.5 mm is obtained.

2. A process as claimed in claim 1, characterized in that at most 5% by volume gas is used for charging.

3. A process as claimed in claim 1 or 2, characterized in that an average bubble size of at most 1 mm is established.

4. A process as claimed in claim 1, 2 or 3, characterized in that air, carbon dioxide, nitrogen or noble gases are used as the inert gases.

## Revendications

1. Procédé de production de mousses de polyuréthanne par réaction d'un mélange réactionnel apte à mousser, comprenant

a) des polyisocyanates,

b) des polyols d'un poids moléculaire de 350 à 10000,

c) des agents porogènes liquides et le cas échéant

d) d'autres additifs, en ajoutant tout d'abord l'agent porogène

liquide au composant a) et/ou au composant b) et en incorporant en outre par dispersion un gaz inerte, en faisant arriver ce composant immédiatement et en continu au mélange avec l'autre composant et en le maintenant alors jusqu'au moment du mélange au moins sous la pression sous laquelle se trouvait la charge de gaz, et en faisant mousser le mélange réactionnel produit, caractérisé en ce qu'on charge le composant a) et/ou le composant b) contenant l'agent porogène — par rapport à 22°C et à la pression normale (= 1,013 bar) — à une pression de 2 à 8 bars avec 2 à 10% en volume de gaz, en injectant le gaz par dispersion en bulles si fines que l'on obtient un diamètre moyen des bulles de gaz de 1,5 mm au maximum.

7

2. Procédé suivant la revendication 1, caractérisé en ce qu'on effectue la charge avec un maximum de 5% en volume de gaz.

3. Procédé suivant la revendication 1 ou 2, caractérisé en ce qu'on ajuste un diamètre moyen des bulles de 1 mm au maximum.

4. Procédé suivant l'une des revendications 1, 2 ou 3, caractérisé en ce qu'on utilise comme gaz inertes l'air, l'anhydride carbonique, l'azote ou des gaz nobles.